(19) Europäisches Patentamt
European Patent Office
Office européen des brevets

(11) **EP 4 626 014 A1**

(12) **EUROPEAN PATENT APPLICATION**
published in accordance with Art. 153(4) EPC

(43) Date of publication:
**01.10.2025  Bulletin 2025/40**

(21) Application number: **23906587.3**

(22) Date of filing: **22.11.2023**

(51) International Patent Classification (IPC):
**H04N 23/957** *(2023.01)*    **G06T 7/557** *(2017.01)*

(52) Cooperative Patent Classification (CPC):
**G06T 7/557; H04N 23/957**

(86) International application number:
**PCT/JP2023/042033**

(87) International publication number:
**WO 2024/135218 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.12.2022  JP 2022202566**

(71) Applicants:
• **Hiroshima University**
  **Higashihiroshima-shi**
  **Hiroshima 739-8511 (JP)**
• **NATIONAL UNIVERSITY CORPORATION SHIZUOKA UNIVERSITY**
  **Shizuoka-shi, Shizuoka 422-8529 (JP)**

(72) Inventors:
• **SUGI, Takuma**
  **Higashihiroshima-shi, Hiroshima 739-8511 (JP)**
• **IMAMURA, Ryuki**
  **Higashihiroshima-shi, Hiroshima 739-8511 (JP)**
• **USUKI, Shin**
  **Hamamatsu-shi, Shizuoka 432-8561 (JP)**

(74) Representative: **Caspary, Karsten et al**
  **Kroher-Strobel**
  **Rechts- und Patentanwälte PartmbB**
  **Bavariaring 20**
  **80336 München (DE)**

(54) **IMAGE PROCESSING DEVICE, IMAGE PROCESSING METHOD, AND PROGRAM**

(57)    An image processing device (30) comprises: an element image group generation unit (31) that automatically generates an element image group by cutting out element images from multi-viewpoint image data; a pixel profile generation unit (32) that automatically generates a pixel profile that represents the relationship between the shift quantity of the element images and the pixel values of pixels, the pixel values of pixels representing values obtained by changing the shift quantity of element images relating to adjoining viewpoints and partially overlapping the element images and reflecting, for pixels that overlap each other between the element images, the pixel values of said pixels; a pixel depth determination unit (33) that automatically associates, for each of the pixels and with reference to the pixel profile, the pixel with a depth corresponding to the shift quantity of the element images at the time when the pixel value of said pixel takes an extreme value; and an image reconstruction unit (34) that automatically reconstructs images by shifting the element images by a shift quantity corresponding to a designated depth and overlapping the element images, and setting the pixel value of pixels which are not associated with the designated depth to substantially zero so as to be refocused on the designated depth.

EP 4 626 014 A1

10

100

MULTI-VIEWPOINT IMAGE
(LIGHT FIELD IMAGE)

1  2  2a  3

20

30

STORAGE DEVICE

MULTI-VIEWPOINT
IMAGES

ELEMENT IMAGES

PQ ARRAYS

PIXEL PROFILES

PER-PIXEL DEPTH
TABLES

RECONSTRUCTED
IMAGES

Read

Write

IMAGE PROCESSING
APPARATUS

ELEMENT IMAGE
GENERATOR — 31

PIXEL PROFILE
GENERATOR — 32

PER-PIXEL DEPTH
MAPPER — 33

IMAGE
RECONSTRUCTOR — 34

FIG. 1

## Description

TECHNICAL FIELD

The present invention relates to an image processing apparatus, an image processing method, and a program, and particularly relates to an image processing technique suitable for reconstructing an image refocused to a various depth from a light field image that records a light space (i.e. light field).

BACKGROUND ART

High-speed and large-scale three-dimensional imaging is required to observe biomolecules and intracellular behavior delicately and dynamically. A spinning disk confocal microscope is available as a microscope that enables such three-dimensional imaging. The spinning disk confocal method involves irradiating laser light onto a rotating disk having multiple pinholes arranged thereon to create multiple parallel light beams, and high-speed scanning a sample with these beams to form a confocal image. While this method can acquire high-resolution images, it requires scanning in the depth direction, which takes time for measurement and is unsuitable for observing high-speed phenomena. In addition, the apparatus tends to be large-scale and costly.

Light Field Microscopy (LFM) is another option for three-dimensional imaging. A light field represents a collection of light rays in three-dimensional space. LFM enables recording of a light field by placing a microlens array, in which numerous microlenses are arranged two-dimensionally, on an intermediate image plane, and obtaining passage positions of light rays on an aperture stop of an objective lens and acquisition positions of light rays on an image sensor. From a light field image recorded by LFM, sub-aperture images corresponding to small-aperture lenses can be acquired. Sub-aperture images are obtained by partially imaging a subject with shifted viewpoints, each having a deep depth of field due to a pinhole effect while having parallax with other sub-aperture images. Therefore, an image refocused to a various depth can be reconstructed by shifting and superimposing the sub-aperture images.

As described above, LFM is suitable for observing high-speed phenomena because it can capture three-dimensional images at high speed in a single shot without scanning in the depth direction. On the other hand, since three-dimensional space is recorded in a two-dimensional light field image, the resolution is significantly reduced compared to the spinning disk confocal method. Therefore, how to improve spatial resolution is important in LFM. In this regard, light field images are subjected to deconvolution processing to improve resolution (see, for example, Non-Patent Literature 1), or computational optical sectioning is performed by introducing an incoherent multiscale scattering model (see, for example, Non-Patent Literature 2).

CITATION LIST

NON-PATENT LITERATURE

Non-Patent Literature 1 : Prevedel, R., Yoon, YG., Hoffmann, M. et al. Simultaneous whole-animal 3D imaging of neuronal activity using light-field microscopy. Nat Methods 11, 727-730 (2014).
Non-Patent Literature 2 : Zhang, Y., Lu, Z., Wu, J. et al. Computational optical sectioning with an incoherent multiscale scattering model for light-field microscopy. Nat Commun 12, 6391 (2021).

SUMMARY OF THE INVENTION

TECHNICAL PROBLEM

The inventors of the present application disclosed, in a prior patent application (Japanese Patent Application No. 2021-185638), an invention that enables improvement of resolution in XY directions for reconstructed images of LFM. The problem of the present invention is to improve resolution in the Z direction, that is, the depth direction, for reconstructed images of LFM.

SOLUTION TO THE PROBLEM

According to one aspect of the present invention, there are provided an image processing apparatus for reconstructing an image refocused to a various depth from a multi-viewpoint image including a plurality of sub-images obtained by capturing a same subject from a plurality of viewpoints shifted from each other, the image processing apparatus including an element image generator that is configured to automatically generate a collection of element images by extracting element images from the multi-viewpoint image, the element images being captured images from mutually different viewpoints, a pixel profile generator that is configured to automatically generate a pixel profile representing a relationship between a shift amount of element images and a pixel value of each pixel by partially superimposing element images relating to adjacent viewpoints in the collection of element images while varying shift amounts, and for pixels that overlap between the element images, using values reflecting pixel values of the pixels as pixel values of the pixels, a per-pixel depth mapper that is configured to automatically map, for each pixel of each element image in the collection of element images, a depth corresponding to a shift amount of element images when a pixel value of the pixel attains a local extremum to the pixel by referring to the pixel profile, and an image reconstructor that is configured to automatically reconstruct an image refocused to a specified depth by shifting and superimposing element images in the collection of element images with a shift amount corresponding to the specified depth, and making pixel values of pixels not mapped to the specified depth substantially zero, and a corresponding image processing method, and a computer program for causing a computer to execute the image processing described above or a recording medium having the computer program recorded thereon.

ADVANTAGEOUS EFFECTS OF THE INVENTION

According to the present invention, the resolution in the depth direction can be improved for reconstructed images of, for example, a light field microscope.

BRIEF DESCRIPTION OF DRAWINGS

[FIG. 1] is a schematic diagram of an optical system including an image processing apparatus according to an embodiment of the present invention.
[FIG. 2] is a flowchart of an image processing method according to an embodiment of the present invention.
[FIG. 3] is a diagram showing (a) a multi-viewpoint image, (b) a collection of element images, and (c) a reconstructed image according to an example.
[FIG. 4] is a diagram schematically showing geometric relationships of parameters of an optical unit according to an example.
[FIG. 5] is a diagram explaining superimposition of element images in generation of pixel profiles.
[FIG. 6] is a diagram explaining a per-pixel depth mapping according to an example.
[FIG. 7] is a diagram comparing resolutions of a reconstructed image by a simple averaging method, a weighted averaging method, and the image processing apparatus according to the present embodiment.

DETAILED DESCRIPTION OF THE INVENTION

Hereinafter, the embodiments will be described in detail with reference to the drawings as appropriate. However, overly detailed explanations may be omitted. For example, detailed descriptions of well-known matters and redundant explanations of substantially identical configurations may be omitted. This is to avoid unnecessary redundancy in the following description and to facilitate understanding by those skilled in the art. The inventors provide the accompanying drawings and the following description for the purpose of enabling those skilled in the art to fully understand the present invention, and do not intend to limit the subject matter described in the claims. Additionally, the dimensions and detailed shapes of the parts depicted in the drawings may differ from the actual ones.

Embodiment

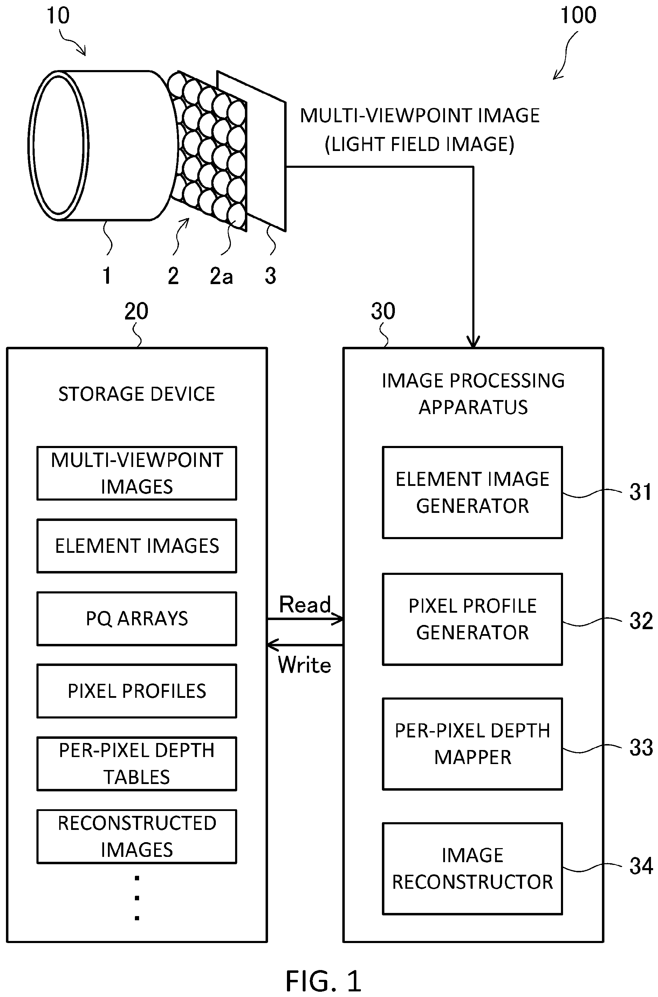

FIG. 1 is a schematic diagram of an optical system including an image processing apparatus according to an embodiment of the present invention. The optical system 100 includes an optical unit 10, a storage device 20, and an image processing apparatus 30. The storage device 20 may be disposed on cloud services. All or part of components of the image processing apparatus 30 may also be disposed on the cloud services.

The optical unit 10 includes a main lens 1, a microlens array 2, and an image sensor 3. The main lens 1 may include an objective lens and an imaging lens, but here, for convenience, what includes them is represented as the main lens 1. The microlens array 2 is configured by two-dimensionally arranging a plurality of microlenses (i.e. lenslets) 2a, and is disposed between the main lens 1 and the image sensor 3. The image sensor 3 is a CCD sensor, CMOS sensor, or the like configured by two-dimensionally arranging a plurality of light receiving elements (not shown) that photoelectrically convert input light and output electrical signals. The electrical signals output from each light receiving element are converted into digital data by an A/D converter (not shown), and a light field image as a multi-viewpoint image is output from the optical unit 10.

The storage device 20 is a collection of storage devices such as RAM, ROM, SSD, and HDD. The RAM is mainly used as working memory when the image processing apparatus 30 performs image processing. The ROM, SSD, and HDD mainly store, temporarily or for a long period, computer programs for operating the image processing apparatus 30 or computer programs provided by being stored in computer-readable non-transitory recording media, multi-viewpoint images output from the optical unit 10, element images generated and used in image processing described later, PQ arrays, pixel profiles, per-pixel depth tables, reconstructed images, and the like.

The image processing apparatus 30 includes an element image generator 31, a pixel profile generator 32, a per-pixel depth mapper 33, and an image reconstructor 34. These components can be implemented as hardware such as ASIC or FPGA, or as software that executes computer programs stored in a recording medium (not shown) or the storage device 20 with one or more processors (not shown) such as CPU or GPU. They can also be implemented by appropriately combining hardware and software. The image processing apparatus 30 appropriately accesses various storage devices constituting the storage device 20 to write and read data while executing image processing.

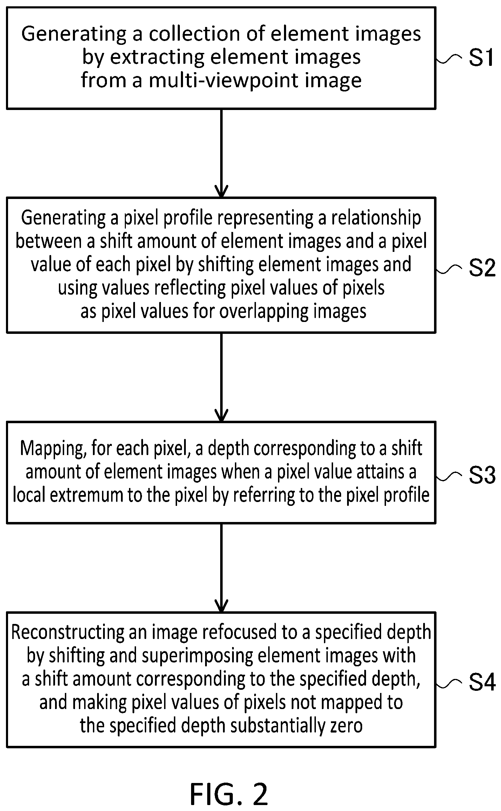

FIG. 2 is a flowchart of an image processing method according to an embodiment of the present invention. Each step is executed in the above components of the image processing apparatus 30.

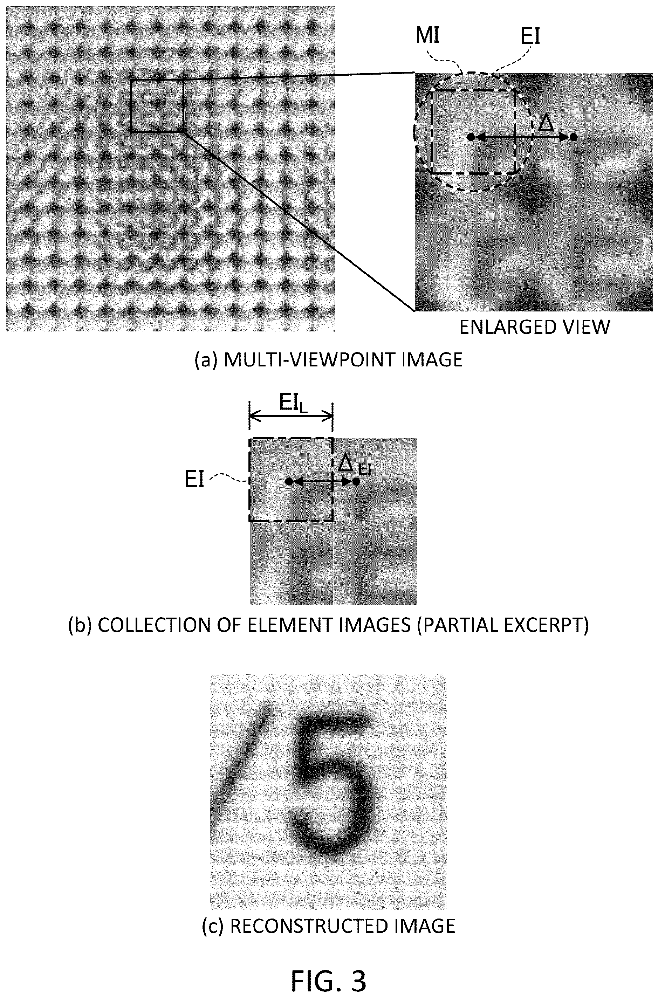

The element image generator 31 automatically generates a collection of element images by extracting element images, which are captured images from mutually different viewpoints, from a multi-viewpoint image (S1). FIG. 3 is a diagram showing a multi-viewpoint image, a collection of element images, and a reconstructed image according to an example. An example multi-viewpoint image (a) is obtained by capturing a sheet marked with the characters "/5" placed at a position shifted from the focal plane of the optical unit 10. The multi-viewpoint image is a collection of microlens images in which numerous microlens images (corresponding to sub-aperture images) MI captured by each microlens 2a of the microlens array 2 of the optical unit 10 are arranged in a square lattice pattern. The shape of each microlens image MI is substantially circular reflecting the circular shape of each microlens 2a, as shown by broken lines. Thus, the multi-viewpoint image is a collection of multiple sub-images (microlens images MI in the example of FIG. 3) obtained by capturing the same subject from multiple viewpoints shifted from each other.

The vicinity of the boundary of the microlens image MI is dark due to a small amount of light rays, and has large distortion because it captures light rays that have passed through edge portions of the microlens 2a, so the central portion of the microlens image MI is used in image processing such as image reconstruction. That is, the element image generator 31 extracts, for example, a square region inscribed in the circle as an element image EI from each substantially circular microlens image MI. What arranges these element images EI in a square lattice pattern is the collection of element images (b). The extracted element images are stored in the storage device 20.

As described above, since the sheet marked with the characters "/5" is at a position shifted from the focal plane of the optical unit 10, microlens images obtained by partially imaging the characters "/5" with shifted viewpoints by each microlens 2a, that is, microlens images having parallax, are recorded in the multi-viewpoint image (a). For example, focusing on the upper left corner portion of the character "5", light rays emitted from the corresponding portion of the subject are recorded with an interval $\Delta$ between adjacent microlens images. As shown in the collection of element images (b), the interval $\Delta$ between microlens images corresponds $\Delta_{EI}$ between element images. Here, when the pitch of the microlenses 2a is MLP and the length of one side of the element image is $EI_L$, $\Delta_{EI}$ is expressed by the following equation (1).

$$\Delta_{EI} = \Delta - (MLP - EI_L) \ ... \ (1)$$

A reconstructed image (c) is obtained by shifting and superimposing adjacent element images in the collection of element images with a shift amount corresponding to parallax. In the example of FIG. 3, by shifting and superimposing adjacent element images by $\Delta_{EI}$, a reconstructed image (c) refocused to the position of the sheet marked with the characters "/5" is obtained. In this way, by appropriately changing the shift amount and superimposing element images, an image refocused to a various depth position can be reconstructed from the acquired image based on backward ray tracing.

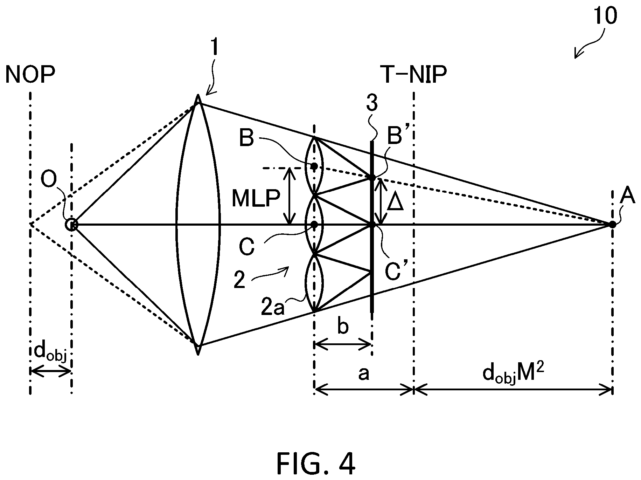

Here, for an object to be refocused, when the depth, which is a deviation from a native object plane NOP of an object-side focal plane of an objective lens in the main lens 1, is $d_{obj}$, the relationship between an interval $\Delta$ of light rays from the same point origin between adjacent microlens images and the depth $d_{obj}$ of the point can be expressed using parameters of the optical unit 10. FIG. 4 is a diagram schematically showing geometric relationships of parameters of the optical unit 10 according to an example. In the figure, "O" is an object at a position of depth $d_{obj}$, "A" is an imaging point of the object O by the main lens 1, "B" and "C" are centers of adjacent microlenses 2a, and B' and C' are positions of light rays from the object O captured by the image sensor 3 via B and C. When focusing on triangle ABC and triangle AB'C' in the figure, from the similarity relationship of the triangles, BC : B'C' = CA : C'A. When this is expressed by parameters, MLP : $\Delta$ = (a + $d_{obj}$ M²) : (a + $d_{obj}$ M² - b). Solving this for $\Delta$ yields the following equation (2).

$$\Delta = MLP(1 - b/(d_{obj} M^2 - a)) \ ... \ (2)$$

where MLP: pitch of the microlenses 2a, M: magnification of the objective lens of the main lens 1, a: distance from an image-side focal plane T-NIP (Native Image Plane) of an imaging lens of the main lens 1 to the center of the microlens 2a, b: distance from the center of the microlens 2a to the image sensor 3. Note that in FIG. 4, "a" is considered as a positive value to show the geometric relationship, but when the direction from the object side toward the image side is positive, "a" needs to be considered as a negative value. Therefore, in equation (2), "a" is finally replaced with "- a."

Note that since there is no anisotropy with respect to two directions (X direction, Y direction) that are perpendicular to each other in a plane perpendicular to the depth direction (Z direction), the same $\Delta$ can be applied to the X direction and Y direction, respectively.

That is, from equations (1) and (2), if the interval $\Delta_{EI}$ of light rays from the same point origin between adjacent element images is known, the depth $d_{obj}$ of the point can be specified. This $\Delta_{EI}$ can be estimated from change characteristics of pixel values of each pixel when adjacent element images are partially superimposed with varying shift amounts. A specific procedure for $\Delta_{EI}$ estimation will be described below.

Returning to FIG. 2, the pixel profile generator 32 automatically generates pixel profiles representing relationships between shift amounts of element images and pixel values of each pixel by partially superimposing element images relating to adjacent viewpoints in the collection of element images while varying shift amounts, and for pixels that overlap between the element images, using values reflecting pixel values of those pixels as pixel values of the pixels (S2). The generated pixel profiles are stored in the storage device 20.

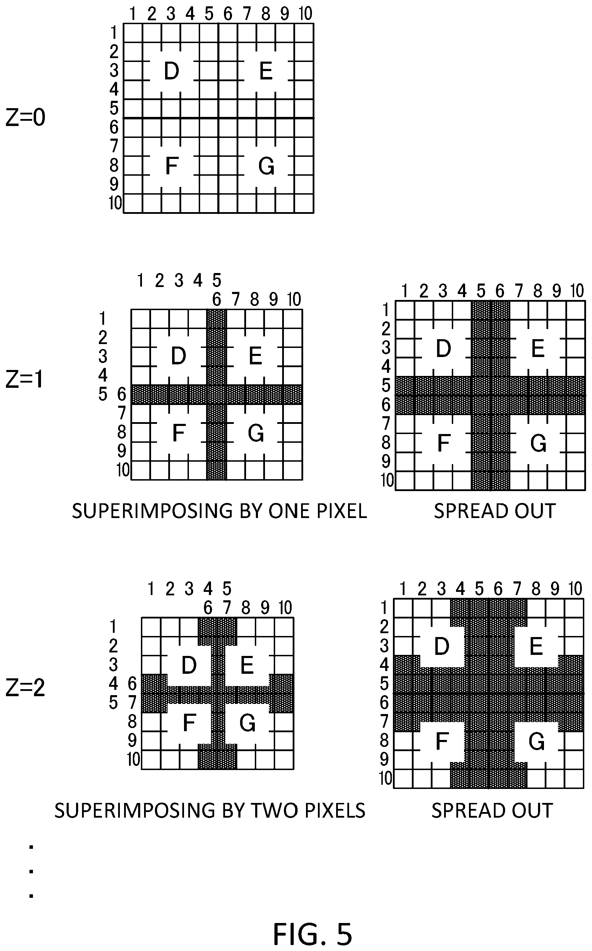

FIG. 5 is a diagram explaining superimposition of element images in generation of pixel profiles. Overlapping pixels are displayed with hatching, the left column shows a state where element images overlap, and the right column shows a state where the overlap of element images is spread out. For convenience, the collection of element images includes four element images D, E, F, and G in total arranged vertically and horizontally in two, and the size of each element image is 5 pixels vertically and horizontally. The arrangement relationship of the element images is such that element image E is placed to the right of element image D, element image F is placed below element image D, and element image G is placed below element image E, that is, to the right of element image F. Sequential numbers starting from 1 are assigned to rows and columns to refer to each pixel in the collection of element images. For example, pixels belonging to element image D are referenced in the range from the first row to the fifth row and from the first column to the fifth column, and pixels belonging to element image G are referenced in the range from the sixth row to the tenth row and from the sixth column to the tenth column. Hereinafter, pixel [m, n] refers to a pixel located in the m-th row and n-th column in the collection of element images.

$Z$ in the figure is a depth parameter representing $d_{obj}$. For convenience, $d_{obj}$ and the shift amount of element images are represented by the same $Z$ value. That is, when $Z = n$, $d_{obj} = n$ and represents that the shift amount of element images is n pixels.

A pixel profile is generated for each pixel in the collection of element images. Generation of pixel profiles starts from $Z = 0$. First, when $Z = 0$, the pixel profile generator 32 records pixel values of each pixel in the collection of element images as initial pixel values of the pixels in the pixel profile.

Next, when $Z = 1$, the pixel profile generator 32 shifts adjacent element images by one pixel and superimposes them, calculates pixel values of overlapping pixels, and records them in the pixel profile. Which pixels in the collection of element images are to be superimposed can be easily determined by referring to a PQ array that indicates how pixels are superimposed. The PQ array represents row numbers or column numbers of pixels in the collection of element images folded back in units of element images, and as shown in the figure, for example, the PQ array corresponding to $Z = 1$ is represented as follows.

1 2 3 4 5 6
6 7 8 9 10 This PQ array means that pixels in the fifth row (fifth column) and pixels in the sixth row (sixth column) overlap. By preparing such PQ arrays for each $Z$ value in advance and storing them in the storage device 20, the pixel profile generator 32 can execute pixel superimposition by referring to PQ arrays corresponding to $Z$ values stored in the storage device 20.

When element images are shifted by one pixel and superimposed by referring to the PQ array, pixels in the fifth row that are part of element images D and E overlap with pixels in the sixth row that are part of element images F and G, and pixels in the fifth column that are part of element images D and F overlap with pixels in the sixth column that are part of element images E and G. For these overlapping pixels, values reflecting pixel values of those pixels, for example, average values or weighted addition values, are recorded in the pixel profile as pixel values of those pixels. For example, pixel values of overlapping pixel [5, 10] and pixel [6, 10] are averaged, and the average value is recorded in the pixel profiles of both pixels. Also, for pixels [5, 5], [5, 6], [6, 5], and [6, 6] where four element images overlap, an average of pixel values of these four pixels is recorded in the pixel profiles of these pixels.

Next, when $Z = 2$, the pixel profile generator 32 shifts adjacent element images by two pixels and superimposes them, calculates pixel values of overlapping pixels, and records them in the pixel profile. As shown in the figure, for example, the PQ array corresponding to $Z = 2$ is represented as follows.

1 2 3 4 5
6 7 8 9 10 This PQ array means that pixels in the fourth and fifth rows (fourth and fifth columns) and pixels in the sixth and seventh rows (sixth and seventh columns) overlap, respectively. When element images are shifted by two pixels and superimposed by referring to the PQ array, pixels in the fourth and fifth rows that are part of element images D and E overlap with pixels in the sixth and seventh rows that are part of element images F and G, respectively, and pixels in the fourth and fifth columns that are part of element images D and F overlap with pixels in the sixth and seventh columns that are part of element images E and G, respectively. For these overlapping pixels, values reflecting pixel values of these pixels, for example, average values or weighted addition values, are recorded in the pixel profile as pixel values of those pixels. For example, pixel values of overlapping pixel [4, 10] and pixel [6, 10] are averaged, and the average value is recorded in the pixel profiles of both pixels. Also, in portions where four element images overlap, for example, for pixels [4, 4], [4, 6], [6, 4], and [6, 6], an average of pixel values of these four pixels is recorded in the pixel profiles of these pixels.

The pixel profile generator 32 automatically generates pixel profiles of each pixel from $Z = 3$ onward in the same manner as above by partially superimposing element images relating to adjacent viewpoints in the collection of element images while varying shift amounts. The pixel profile generator 32 continues pixel profile generation until a $Z$ value smaller than the number of pixels in rows or columns of element images, for example, until $Z = 4$ in the example of FIG. 5. Note that pixel profiles may be generated in descending order of $Z$ values.

Note that three or more element images may overlap in the column direction and row direction, and in that case, the PQ array would include three or more rows. Also, when element images have the same number of pixels in rows and columns as in the above example, a common PQ array can be used for superimposition of element images in the row direction and column direction, but when the numbers of pixels in rows and columns of element images are different from each other, it is necessary to prepare a PQ array for the row direction and a PQ array for the column direction.

Returning to FIG. 2, the per-pixel depth mapper 33 automatically maps, for each pixel of each element image in the collection of element images, a depth corresponding to a shift amount of element images when the pixel value of the pixel attains a local extremum by referring to the pixel profile to the pixel (S3). This mapping information is stored in the storage device 20 as a per-pixel depth table.

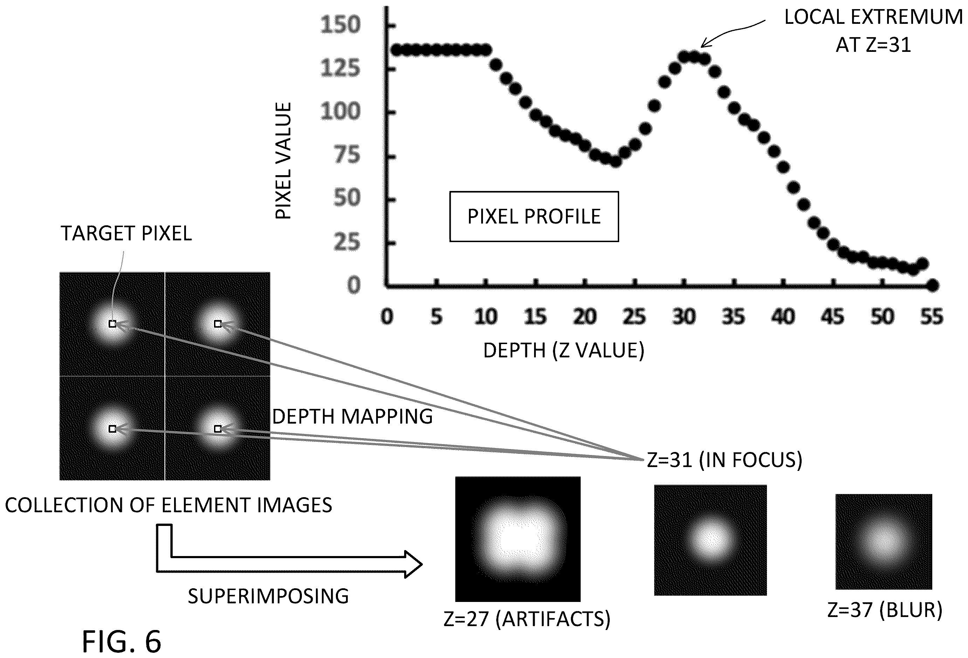

FIG. 6 is a diagram explaining per-pixel depth mapping according to an example. The graph in the figure visualizes a pixel profile of a target pixel, with the vertical axis representing pixel values and the horizontal axis representing depth (Z values). An example target pixel is a central pixel of an optical image of an object captured in the four element images shown in the figure. The optical image of the object is a substantially circular image that is bright at the center and becomes darker toward the periphery. A larger pixel value indicates that the pixel is brighter. Also, it is assumed that average values are recorded as pixel values of overlapping pixels in the pixel profile. As can be seen from the graph of the pixel profile, the pixel value of the target pixel maintains an initial value [130] from Z = 1 to 10, decreases from Z = 10, starts to increase at Z = 23, recovers to the initial value at Z = 31, and decreases again from Z = 31 onward. The fact that the pixel value, which once decreased, increases from Z = 23 to 31, attains a local extremum at Z = 31, and decreases again from Z = 31 onward suggests that at Z = 31, central pixels of substantially circular images of objects in adjacent element images overlap with each other. That is, the optical image of the object is in focus at Z = 31, and at other values, for example, artifacts occur at Z = 27, or blur occurs at Z = 37. The per-pixel depth mapper 33 automatically identifies the depth when the pixel value becomes a local extremum from this pixel profile, and maps Z = 31 as $d_{obj}$ to this pixel.

Note that the pixel profile shown in FIG. 6 is merely an example, and not all pixel profiles have characteristics as shown in FIG. 6, and pixel profiles can vary in various ways depending on the type and state of the subject. For example, in an image capturing two bright and dark objects having different depths from each other, a pixel profile may be generated in which pixel values of the darker optical image are averaged with pixel values of the brighter optical image, thereby exceeding the initial value. In such a case, the per-pixel depth mapper 33 may ignore values larger than the initial pixel value (pixel value when Z = 0) in the pixel profile, that is, not recognize them as local extrema, and find local extrema that are only below the initial pixel value and map the depth at that time to the pixel. This enables identifying correct local extrema in pixel profiles of special patterns and mapping correct depths to pixels.

Also, when local extrema cannot be accurately identified in the pixel profile, or when local extremum determination is incorrect due to noise included in the pixel profile, there is a risk that an incorrect depth may be mapped to the pixel. To address such situations, the per-pixel depth mapper 33 may map, for each pixel of each element image in the collection of element images, a depth corresponding to a shift amount of element images when the pixel value of the pixel attains a value within a predetermined range from a local extremum to the pixel by referring to the pixel profile. Explaining with the example of FIG. 6, if Z values when pixel values attain values within, for example, a 5% range from the local extremum are also adopted, Z = 29, 30, 32, and 33 in addition to Z = 31 would be mapped to the target pixel. In this way, multiple depths may be mapped to one pixel. This enables absorbing errors in local extremum determination and mapping depths to pixels within a range considered to be accurate to some extent.

Returning to FIG. 2, the image reconstructor 34 automatically reconstructs an image refocused to a specified depth by shifting and superimposing element images in the collection of element images with a shift amount corresponding to the specified depth, and making pixel values of pixels not mapped to the specified depth substantially zero (S4). As explained with reference to FIG. 3, a reconstructed image refocused to a depth corresponding to $\Delta_{EI}$ is obtained by shifting and superimposing adjacent element images by $\Delta_{EI}$ corresponding to parallax, and at that time, the image reconstructor 34 refers to the per-pixel depth table stored in the storage device 20, uses pixels corresponding to the specified depth as they are, and automatically reconstructs an image by making pixel values of other pixels zero or substantially zero, that is, completely black or substantially black. In the example of FIG. 6, when Z = 32 is specified as the depth, the central pixel of the object is used as it is, but when other ranges are specified, the pixel value of the pixel is made zero or substantially zero and the image is reconstructed.

Advantageous Effects

According to the image processing apparatus 30 of the present embodiment, computational optical sectioning can be performed to separate light rays from light sources having different depths from each other on a pixel-by-pixel basis, and Z-direction resolution of reconstructed images can be enhanced. Also, since the image processing can be executed at the frame rate of the optical unit 10, three-dimensional imaging of high-speed phenomena becomes possible.

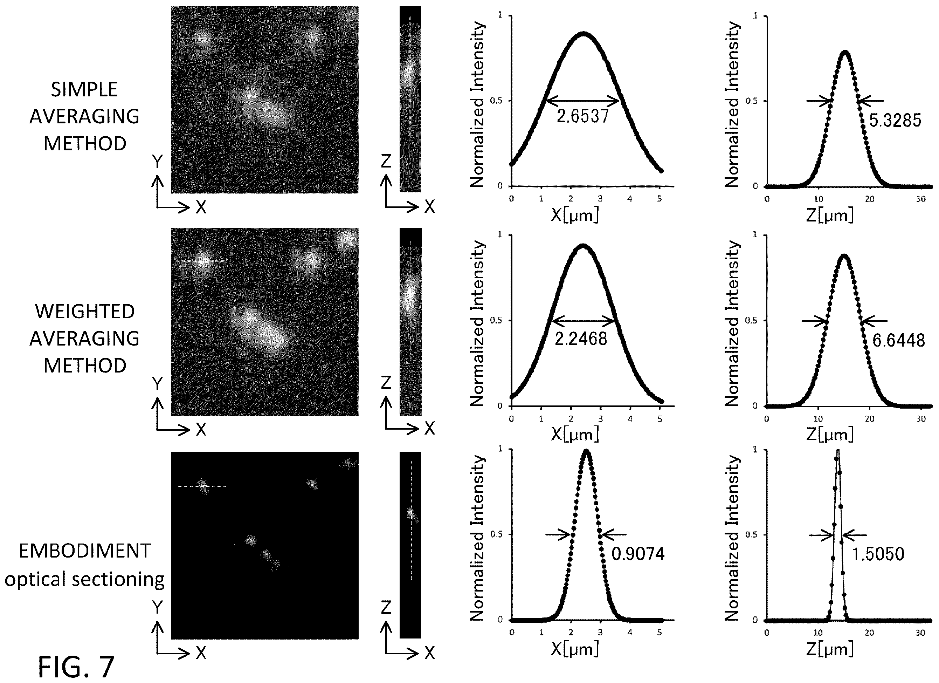

FIG. 7 is a diagram comparing resolutions of a reconstructed image by a simple averaging method, a weighted averaging method, and the image processing apparatus 30. The simple averaging method uses an average of pixel values of overlapping pixels as pixel values of a reconstructed image when element images are superimposed to reconstruct an image. The weighted averaging method uses, when element images are superimposed to reconstruct an image, a weighted average of overlapping pixels in which weights are made relatively large for pixels near the center of an element image region and weights are made relatively small for pixels at edges, as pixel values of a reconstructed image. For each algorithm, from left to right, a reconstructed image at a certain depth (X-Y diagram) obtained by reconstructing light field image of captured fluorescent particles, a depth diagram (X-Z diagram) viewing the broken line portion in the X-Y diagram in the depth direction (Z direction), a graph of depth versus luminance of the broken line portion in the X-Y diagram, and a graph of depth versus luminance of the broken line portion in the X-Z diagram are shown. Decimal values noted in each graph are resolutions (full width at half maximum). Compared to the present embodiment, in the reconstructed image by the simple averaging method and weighted averaging method, optical images are blurred in both X and Z directions. The X-direction resolution of the reconstructed image by the simple averaging method is 2.6537 $\mu$m, the Z-direction resolution is 5.3285 $\mu$m, the X-direction resolution of the reconstructed image by the weighted averaging method is 2.2468 $\mu$m, and the Z-direction resolution is 6.6448 $\mu$m, and the resolutions of both are substantially the same. In contrast, the X-direction resolution of the reconstructed image by the optical sectioning method of the image processing apparatus 30 is 0.9074 $\mu$m and the Z-direction resolution is 1.5050 $\mu$m, showing significant improvement in resolution not only in the X direction but also in the Z direction compared to the simple averaging method and weighted averaging method.

Modifications

The above description assumes that element images are arranged in a square lattice pattern in the collection of element images, but when a microlens array in which microlenses are arranged in a honeycomb pattern is used, element images may be arranged in a honeycomb pattern. Even in such cases, a high-resolution image can be obtained by determining intervals of light rays from the same point origin between adjacent element images, mapping depths corresponding to the intervals to pixels, and using only pixels mapped to specified depths when reconstructing images.

Sub-images in multi-viewpoint images do not need to be arranged two-dimensionally and may be arranged one-dimensionally vertically or horizontally.

Multi-viewpoint images are not limited to light field images, and may be any collection of multiple sub-images obtained by capturing the same subject from multiple viewpoints shifted from each other. For example, they may be captured by a multi-camera in which numerous cameras are arranged. Also, images captured by each camera in the multi-camera do not need to be combined as one image data, and images captured by each camera may be stored as individual data-files. In that case, a set of those image data-files would be the multi-viewpoint images.

As described above, embodiments of the present invention have been explained as examples of the technology. For this purpose, attached drawings and detailed explanations have been provided. Therefore, among the components described in the attached drawings and detailed explanations, there may be components that are not essential for solving the problem but are included to illustrate the above technology. Accordingly, the presence of these non-essential components in the attached drawings or detailed explanations should not immediately be taken as an indication that these non-essential components are essential. Furthermore, since the above-described embodiments are for illustrating the technology of the present invention, various modifications, replacements, additions, and omissions can be made within the scope of the claims and their equivalents.

INDUSTRIAL APPLICABILITY

The image processing apparatus according to the present invention can perform high-speed and high-resolution three-dimensional imaging, and therefore is useful for light field microscopes that observe high-speed phenomena such as biomolecules and intracellular behavior.

REFERENCE SIGNS LIST

30 Image processing apparatus
31 Element image generator
32 Pixel profile generator
33 Per-pixel depth mapper
34 Image reconstructor

**Claims**

1. An image processing apparatus for reconstructing an image refocused to a various depth from a multi-viewpoint image including a plurality of sub-images obtained by capturing a same subject from a plurality of viewpoints shifted from each other, comprising:

an element image generator that is configured to automatically generate a collection of element images by extracting element images from the multi-viewpoint image, the element images being captured images from mutually different viewpoints;
a pixel profile generator that is configured to automatically generate a pixel profile representing a relationship between a shift amount of element images and a pixel value of each pixel by partially superimposing element images relating to adjacent viewpoints in the collection of element images while varying shift amounts, and for pixels that overlap between the element images, using values reflecting pixel values of the pixels as pixel values of the pixels;
a per-pixel depth mapper that is configured to automatically map, for each pixel of each element image in the collection of element images, a depth corresponding to a shift amount of element images when a pixel value of the pixel attains a local extremum to the pixel by referring to the pixel profile; and
an image reconstructor that is configured to automatically reconstruct an image refocused to a specified depth by shifting and superimposing element images in the collection of element images with a shift amount corresponding to the specified depth, and making pixel values of pixels not mapped to the specified depth substantially zero.

2. The image processing apparatus according to claim 1, wherein
the pixel profile generator is configured to automatically generate the pixel profile using an average value of pixel values of the overlapping pixels as pixel values of the pixels.

3. The image processing apparatus according to claim 2, wherein
the per-pixel depth mapper is configured to automatically find a local extremum that is equal to or less than an initial pixel value in the pixel profile.

4. The image processing apparatus according to claim 1, wherein
the per-pixel depth mapper is configured to automatically map, for each pixel, a depth corresponding to a shift amount of element images when the pixel value of the pixel attains a value within a predetermined range from a local extremum to the pixel by referring to the pixel profile.

5. The image processing apparatus according to any one of claims 1 to 4, wherein

   the plurality of sub-images has substantially circular shapes and are arranged in a square lattice pattern in the multi-viewpoint image, and the element image generator is configured to automatically extract the element images of square regions inscribed in the circular shapes from each of the plurality of sub-images.

6. The image processing apparatus according to any one of claims 1 to 4, wherein

the multi-viewpoint image is a light field image, and
the sub-images are microlens images.

7. A computer-implemented image processing method for reconstructing an image refocused to a various depth from a multi-viewpoint image including a plurality of sub-images obtained by capturing a same subject from a plurality of viewpoints shifted from each other, comprising:

   automatically generating a collection of element images by extracting element images from the multi-viewpoint image, the element images being captured images from mutually different viewpoints;
   automatically generating a pixel profile representing a relationship between a shift amount of element images and a pixel value of each pixel by partially superimposing element images relating to adjacent viewpoints in the collection of element images while varying shift amounts, and for pixels that overlap between the element images, using values reflecting pixel values of the pixels as pixel values of the pixels;
   automatically mapping, for each pixel of each element image in the collection of element images, a depth corresponding to a shift amount of element images when a pixel value of the pixel attains a local extremum to the pixel by referring to the pixel profile; and
   automatically reconstructing an image refocused to a specified depth by shifting and superimposing element images in the collection of element images with a shift amount corresponding to the specified depth, and making pixel values of pixels not mapped to the specified depth substantially zero.

8. A program for causing a computer to reconstruct an image refocused to a various depth from a multi-viewpoint image including a plurality of sub-images obtained by capturing a same subject from a plurality of viewpoints shifted from each other, the program causing the computer to function as:

   an element image generator that automatically generates a collection of element images by extracting element images from the multi-viewpoint image, the element images being captured images from mutually different viewpoints;
   a pixel profile generator that automatically generates a pixel profile representing a relationship between a shift amount of element images and pixel values of each pixel by partially superimposing element images relating to adjacent viewpoints in the collection of element images while varying shift amounts, and for pixels that overlap between the element images, using values reflecting pixel values of the pixels as pixel values of the pixels;

a per-pixel depth mapper that automatically maps, for each pixel of each element image in the collection of element images, a depth corresponding to a shift amount of element images when a pixel value of the pixel attains a local extremum to the pixel by referring to the pixel profile; and

an image reconstructor that automatically reconstructs an image refocused to a specified depth by shifting and superimposing element images in the collection of element images with a shift amount corresponding to the specified depth, and making pixel values of pixels not mapped to the specified depth substantially zero.

10

100

MULTI-VIEWPOINT IMAGE
(LIGHT FIELD IMAGE)

1   2   2a   3

20

30

STORAGE DEVICE

MULTI-VIEWPOINT
IMAGES

ELEMENT IMAGES

PQ ARRAYS

PIXEL PROFILES

PER-PIXEL DEPTH
TABLES

RECONSTRUCTED
IMAGES

⋮

Read

Write

IMAGE PROCESSING
APPARATUS

ELEMENT IMAGE
GENERATOR — 31

PIXEL PROFILE
GENERATOR — 32

PER-PIXEL DEPTH
MAPPER — 33

IMAGE
RECONSTRUCTOR — 34

FIG. 1

Generating a collection of element images
by extracting element images
from a multi-viewpoint image — S1

Generating a pixel profile representing a relationship
between a shift amount of element images and a pixel
value of each pixel by shifting element images and
using values reflecting pixel values of pixels
as pixel values for overlapping images — S2

Mapping, for each pixel, a depth corresponding to a shift
amount of element images when a pixel value attains a
local extremum to the pixel by referring to the pixel profile — S3

Reconstructing an image refocused to a specified depth
by shifting and superimposing element images with
a shift amount corresponding to the specified depth,
and making pixel values of pixels not mapped to
the specified depth substantially zero — S4

FIG. 2

ENLARGED VIEW

(a) MULTI-VIEWPOINT IMAGE

(b) COLLECTION OF ELEMENT IMAGES (PARTIAL EXCERPT)

(c) RECONSTRUCTED IMAGE

FIG. 3

FIG. 4

Z=0

Z=1

SUPERIMPOSING BY ONE PIXEL

SPREAD OUT

Z=2

SUPERIMPOSING BY TWO PIXELS

SPREAD OUT

FIG. 5

FIG. 6

FIG. 7

EP 4 626 014 A1

## INTERNATIONAL SEARCH REPORT

| International application No. |
|---|
| **PCT/JP2023/042033** |

### A. CLASSIFICATION OF SUBJECT MATTER

*H04N 23/957*(2023.01)i; *G06T 7/557*(2017.01)i
FI:   H04N23/957; G06T7/557

According to International Patent Classification (IPC) or to both national classification and IPC

### B. FIELDS SEARCHED

Minimum documentation searched (classification system followed by classification symbols)

H04N23/957; G06T7/557

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2007-004471 A (NIKON CORPORATION) 11 January 2007 (2007-01-11)<br>entire text, all drawings | 1-8 |
| A | JP 2015-175982 A (CANON KABUSHIKI KAISHA) 05 October 2015 (2015-10-05)<br>entire text, all drawings | 1-8 |
| A | JP 2016-086306 A (CANON KABUSHIKI KAISHA) 19 May 2016 (2016-05-19)<br>entire text, all drawings | 1-8 |
| A | JP 2011-022796 A (CANON KABUSHIKI KAISHA) 03 February 2011 (2011-02-03)<br>entire text, all drawings | 1-8 |
| P, A | JP 2023-072914 A (HIROSHIMA UNIV., NATIONAL UNIV. CORP. SHIZUOKA UNIV.) 25 May 2023 (2023-05-25)<br>entire text, all drawings | 1-8 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

International application No.

**PCT/JP2023/042033**

| Patent document cited in search report | | | Publication date (day/month/year) | Patent family member(s) | | | Publication date (day/month/year) |
|---|---|---|---|---|---|---|---|
| JP | 2007-004471 | A | 11 January 2007 | US | 2009/0140131 | A1 | |
| | | | | entire text, all drawings | | | |
| | | | | WO | 2006/137481 | A1 | |
| JP | 2015-175982 | A | 05 October 2015 | US | 2015/0264249 | A1 | |
| | | | | entire text, all drawings | | | |
| JP | 2016-086306 | A | 19 May 2016 | US | 2016/0119606 | A1 | |
| | | | | entire text, all drawings | | | |
| JP | 2011-022796 | A | 03 February 2011 | (Family: none) | | | |
| JP | 2023-072914 | A | 25 May 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021185638 A

**Non-patent literature cited in the description**

- **PREVEDEL, R.** ; **YOON, YG.** ; **HOFFMANN, M. et al.** Simultaneous whole-animal 3D imaging of neuronal activity using light-field microscopy.. *Nat Methods*, 2014, vol. 11, 727-730

- **ZHANG, Y.** ; **LU, Z.** ; **WU, J. et al.** Computational optical sectioning with an incoherent multiscale scattering model for light-field microscopy.. *Nat Commun*, 2021, vol. 12, 6391